# EUROPÄISCHE PATENTSCHRIFT

(11) **EP 1 067 259 B1**
(45) Veröffentlichungstag und Bekanntmachung des Hinweises auf die Patenterteilung: **17.03.2004**
(21) Anmeldenummer: 00113323.0
(22) Anmeldetag: 23.06.2000
(51) Int. Cl.: E05B 17/00, E05C 9/18, B23P 19/00

(54) **Schliessblechsystem für eine automatengestützte Montage**
Striker system for a machine-supported mounting
Système de gâche pour montage automatisé

(30) Priorität: 08.07.1999 DE 19931717
(43) Veröffentlichungstag der Anmeldung: 10.01.2001
(73) Patentinhaber: Aug. Winkhaus GmbH & Co. KG, D-48291 Telgte (DE)
(72) Erfinder: Renz, Dieter, 49479 Ibbenbüren (DE); Lau, Wolfgang, 48291 Telgte (DE); Kaup, Ludger, 48351 Everswinkel (DE)
(74) Vertreter: Hoffmeister, Helmut, Dr. Dipl.-Phys.

(56) Entgegenhaltungen:
- EP-A- 0 683 297
- EP-A- 0 886 026
- DE-U- 9 216 213
- FR-A- 2 208 433

## Beschreibung

Die Erfindung betrifft eine für eine Montage an Schließblechsystemen an Rahmen, insbesondere Tür- oder Fensterrahmen, bestimmte Vielzahl unterschiedlich ausgebildeter Beschlagteilkörper, die mit wenigstens einer für alle Beschlagteilkörper auf derselben Mittellinie angeordneten Ausnehmung oder Ausnehmungen für Befestigungsteile versehen ist.

Ein Schließblechsystem für Rahmen ist aus der allgemeinen Ausführungsbeschreibung der Firma Winkhaus Technik GmbH & Co. KG, Druck-Nr. 9.00038/HK/G für Kunststoffrahmen, Gruppe 9, Blatt 0 bis 7, und für Holzrahmen, Gruppe 9, Blatt 1, bekannt. Die Schließbleche weisen unterschiedlich ausgebildete Beschlagteilkörper für ein Zusammenwirken mit Flügelbeschlagteilen aus. In die Beschlagteilkörper sind eine oder mehrere Befestigungsausnehmungen eingebracht.

Nachteilig ist, daß die einzelnen Beschlagteilkörper in der Regel von Hand an bestimmten Stellen des Rahmens anzuschrauben sind. Teilweise ist hierfür eine Bohrlehre erforderlich. Selbst wenn ein motorbetriebener Schraubendreher eingesetzt wird, ist die Montage zeit- und kostenaufwendig. Zwar ist in den Hinweisen zu Kunststoffrahmen, Gruppe 9, Blatt 0, Seite 2, ausgeführt, daß analog zur Rationalisierung des Flügelbeschlags auch die Automatisierung des Rahmenbeschlags möglich ist, nur wird eine Automatisierungslösung selbst nicht offenbart.

Aus der DE-U-9 216 213 ist eine Schließplatte bekannt, die aus einem U-förmigen Körper besteht. Dessen U-Schenkel bilden Seitenwände aus, zwischen denen sich eine Deckplatte erstreckt. Parallel zur Deckplatte erstreckt sich eine Bodenplatte, die das U-Profil öffnungsseitig abschließt und bis an die zweite Wand ragt. Durch die kastenförmige Schließplatte kann eine Vielzahl ausgeformter Bodenplatten, welche zu den verschiedenen Nutenformen von verschiedenen Rahmen korrespondierende Zungen aufweisen, mit jeweils identisch ausgestalteten U-Profilen montiert werden. Hierdurch wird der Herstellungsaufwand gesenkt. Eine automatengestützte Montage wird nicht gefordert.

Ein Verfahren zur automatengestützten Montage von Treibstangenelementen an den Flügeln eines Fensters, einer Tür oder dergleichen ist aus der DE-A 4 417 818 bekannt. Hierbei werden baugleiche Eckumlenkungen in einer ersten Montagephase mittels eines Montageautomaten am Flügel befestigt. In einer nachfolgenden zweiten Montagephase werden sämtliche Verbindungselemente am Flügel montiert. Das Verfahren zeichnet sich durch geringe Taktzeiten und vergleichsweise geringem Geräteaufwand aus.

Aus der EP-A- 0 886 026 ist ein Dreh-Kipp-Beschlagsystem bekannt. Damit sich die Langteile einfacher und automatisch montieren lassen, haben alle Langteile eine einheitliche Greiferaufnahme. In jedem der Langteile ist wenigstens eine Anschraubausnehmung in einem definierten Abstand zur Greiferaufnahme angeordnet. Die Greiferaufnahme selbst besteht aus einer ersten und einer zweiten Aufnahmeausnehmung, die in einer Greiferabstandslänge in jedes der Langteile eingebracht sind.

Nachteilig ist, daß die letztgenannten bekannten Lösungen für eine Montage von Beschlagteilen für Flügel eines Fensters oder einer Tür, nicht aber für eine Montage von Beschlagteilkörpern für Tür- oder Fensterrahmen geeignet sind.

Es stellt sich die Aufgabe, ein Schließblechsystem der eingangs genannten Art so weiter zu entwickeln, daß eine einfachere und kostengünstige Montage an Rahmen, insbesondere Türoder Fensterrahmen möglich ist, wobei diese automatengestützt ist.

Erfindungsgemäß wird diese Aufgabe durch die Merkmale des Anspruchs 1 gelöst.

Die mit der Erfindung erzielten Vorteile bestehen insbesondere darin, daß sämtliche Ausnehmungen mit ihren Mittelpunkten entlang von Mittellinien in die Beschlagteilkörper eingebracht sind. Durch diese Anordnung der Ausnehmungen sind diese unifiziert und lassen sich unter einheitlichen Montagegesichtspunkten handhaben. Hierdurch wird eine automatengestützte Montage möglich, denn der Montageautomat braucht nur die auf einer Mittelpunktlinie befindlichen Ausnehmungen bei der Montage abfahren und entsprechend bedienen.

Ausnehmungen für die Befestigung sind entlang einer ersten Mittelpunktlinie in dem Beschlagteilkörper angeordnet. Hierdurch reduziert sich die Montage der einzelnen Beschlagteilkörper nur auf das Einführen von Befestigungsteilen in die einzelnen Befestigungsausnehmungen, ohne daß dabei der unterschiedlich ausgebildete Beschlagteilkörper Berücksichtigung finden muß. Die in Reihe liegenden Befestigungsausnehmungen gestatten ein einfaches Bestücken mit Hilfe des Montageautomaten.

Außer den entlang der Mittellinie liegenden Befestigungsausnehmungen sind darüber hinaus in die Beschlagteilkörper wenigstens eine Montagehilfsausnehmung eingebracht. Hierdurch wird das Aufnehmen der einzelnen Beschlagteilkörper wesentlich erleichtert. Das Vorhandensein der Montagehilfsausnehmungen erlaubt es dem Montageautomaten, die Beschlagteilkörper aus einem Magazin heraus- bzw. von einem Tablett oder dergleichen herauszunehmen. Die Befestigungsausnehmungen können mit ihren Befestigungsausnehmungsmittelpunkten als Mittelpunkt entlang einer Befestigungsausnehmungsmittelpunktlinie als Mittellinie und die Montagehilfsausnehmungen mit ihren Greiferausnehmungsmittelpunkten als weitere Mittelpunkte entlang einer Greiferausnehmungsmittelpunktlinie als weitere Mittellinie in die Beschlagteilkörper eingebracht werden. Durch das Aufreihen der Befestigungsausnehmungen in der Befestigungsausnehmungsmittelpunktlinie und der Montagehilfsausnehmungen in der Greiferausnehmungsmittelpunktlinie werden beide Ausnehmungsformen in unterschiedlichen Linien geführt und führen so bei einem Einsatz eines Montageautomaten nicht zu einer Verwechslung hinsichtlich ihres Verwendungszwecks. Vielmehr wird gesichert, daß die Befestigungsausnehmungen nur der Befestigung und die Montagehilfsausnehmungen nur der Aufnahme der Beschlagteilkörper für ein Befestigen dienen.

Die Befestigungsausnehmungsmittelpunktlinie kann in einem Befestigungsbezugsabstand und die Greifermittelpunktlinie in einem Greiferbezugsabstand gegenüber der Körperbezugslinie beabstandet sein. Die Wahl bestimmter Abstände sichert den jeweiligen genauen Verwendungszweck der Ausnehmungen.

Als Körperbezugslinie können gegenüber den einzelnen Beschlagteilkörpern beabstandete Metallschienen, gespannte Drähte oder dergleichen dienen. Die Körperbezugslinie kann darüber hinaus eine Körperseitenkante der Beschlagteilkörper sein. Hierdurch wird eine einfache und genaue Montage mit Hilfe eines Montageautomaten gesichert.

In Beschlagteilkörper kann als Montagehilfsausnehmungen eine und/oder zwei sich gegenüberliegende Greiferausnehmungen mit einem runden und/oder mehreckigen Querschnitt eingebracht sein. Durch die unterschiedliche Anzahl bzw. die unterschiedliche Gestalt der einzelnen Greiferausnehmungen ist der Einsatz unterschiedlicher Greifersysteme möglich.

Die Befestigungsausnehmungen können als Rundlochausnehmungen mit einem gleichen Durchmesser und/oder Langlochausnehmungen mit einem gleichlangen Langlochabstand ausgebildet sein. Die Durchmesser der Rundlochausnehmungen und die Langlochabstände der Langlöcher können die gleiche Länge aufweisen. Hierdurch ist gewährleistet, daß für das Befestigen der Beschlagteilkörper am Rahmen Schrauben gleichen Durchmessers und damit auch gleicher Länge eingesetzt werden. Das erleichtert nicht nur die Bevorratung, sondern auch die Speicherung dieser Schrauben im Montageautomaten und das Einschrauben dieser Schrauben mit Hilfe des Montageautomaten.

Die Beschlagteilkörper können ausgebildet sein als ein Schließauflaufkörper, ein Balkontürschnäpperkörper, ein Unterteilkörper, ein Sicherheitsschließblechkörper, ein Schließkörper und ein Kippschließblechkörper. Die Beschlagteilkörper sind hinsichtlich ihrer Ausbildung und ihres Einsatzes nicht auf die hier aufgeführten begrenzt. Vielmehr läßt sich die gleiche Anordnung der Befestigungsausnehmungen und der Greiferausnehmungen auf anders gestaltete Beschlagteilkörper übertragen.

Ein Ausführungsbeispiel der Erfindung ist in der Zeichnung dargestellt und wird im folgenden näher beschrieben. Es zeigen:
- Fig. 1a: eine Draufsicht auf einen Schließauflaufkörper,
- Fig. 1b: eine Teilseitenansicht und einen Teilschnitt entlang der Linie IB - IB eines Schließauflaufkörpers gemäß Fig. 1a,
- Fig. 1c: einen Schnitt durch einen Schließauflaufkörper gemäß Fig. 1a entlang der Linie IC- IC,
- Fig. 2a: eine Draufsicht auf einen Balkontürschnäpperkörper,
- Fig. 2b: eine Teilseitenansicht und einen Teilschnitt entlang der Linie IIB - IIB eines Balkontürschnäpperkörpers,
- Fig. 2c: eine Seitenansicht eines Balkontürschnäpperkörpers gemäß Fig. 2a,
- Fig. 3a: eine Draufsicht auf einen Unterteilkörper,
- Fig. 3b: einen Schnitt durch einen Unterteilkörper gemäß Fig. 3a,
- Fig. 3c: eine Seitenansicht eines Unterteilkörpers gemäß Fig. 3a,
- Fig. 4a: eine Unteransicht eines Sicherheitsschließblechkörpers,
- Fig. 4b: eine Draufsicht auf einen Sicherheitsschließblechkörper gemäß Fig. 4a,
- Fig. 4c: eine Seitenansicht eines Sicherheitsschließblechkörpers gemäß Fig. 4b,
- Fig. 4d: einen Schnitt durch einen Sicherheitsschließblechkörper gemäß Fig. 4b entlant der Linie IVD - IVD,
- Fig. 5a: eine Unteransicht eines Schließkörpers,
- Fig. 5b: eine Draufsicht auf einen Schließkörper gemäß Fig. 5a,
- Fig. 5c: eine Hinteransicht eines Schließkörpers gemäß Fig. 5b,
- Fig. 5d: einen Schnitt durch einen Schließkörper gemäß Fig. 5a entlang der Linie VD - VD,
- Fig. 5e: eine Seitenansicht eines Schließkörpers gemäß Fig. 5a,
- Fig. 6a: eine Draufsicht auf einen Kippschließblechkörper,
- Fig. 6b: eine Seitenansicht eines Kippschließkörpers gemäß Fig. 6a und
- Fig. 6c: einen Schnitt durch einen Kippschließblechkörper ge- mäß Fig. 6a entlang der Linie VIC - VIC.

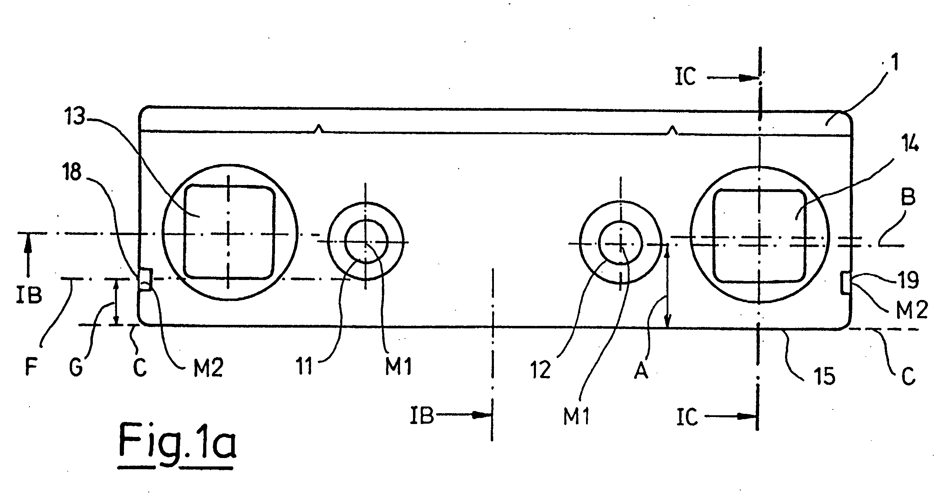

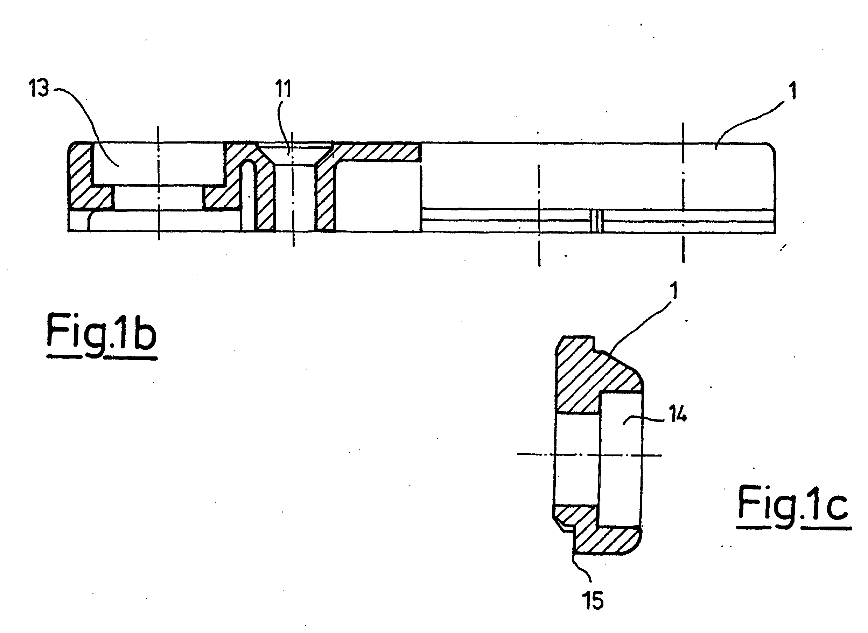

In den Fig. 1a bis 6c sind verschiedene Ansichten unterschiedlich ausgebildeter Beschlagteilkörper eines Schließblechsystems dargestellt.

Fig. 1a bis 1c zeigt einen Schließauflaufkörper 1. In ihn sind beabstandet untereinander zwei Befestigungsausnehmungen 11, 12 eingebracht. Die Befestigungsausnehmungen 11, 12 sind Bohrlochausnehmungen mit einem runden Querschnitt, die aus einem zylinderförmigen und einem kegelstumpfförmigen Teil bestehen, so daß in sie eine Senkschraube einführbar ist. Die beiden kreisförmigen Befestigungsausnehmungen 11, 12 weisen einen Befestigungsausnehmungsmittelpunkt M1 auf.

Zu beiden Seiten der Befestigungsausnehmungen 11, 12 ist jeweils eine Vierkantausnehmung 13, 14 für den entsprechenden Verwendungszweck des Schließauflaufkörpers 1 eingebracht. An den beiden sich gegenüberliegenden schmalen Außenseiten des Schließauflaufkörpers 1 sind eine Greiferausnehmung 18 und eine weitere Greiferausnehmung 19 angeordnet. Beide Greiferausnehmungen 18, 19 weisen jeweils einen Greiferausnehmungsmittelpunkt M2 auf.

Mit 15 ist eine Körperseitenkante des Schließauflaufkörpers 1 bezeichnet.

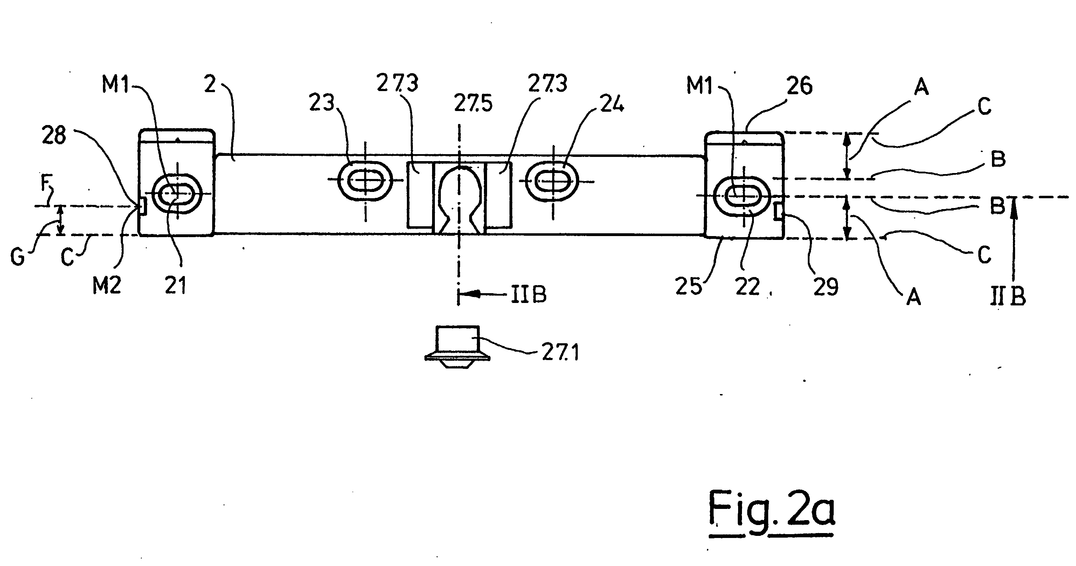

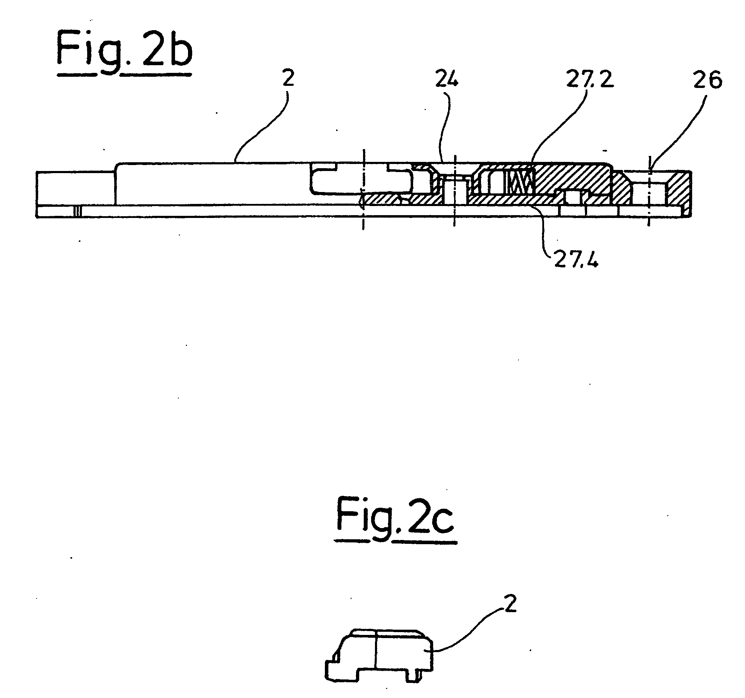

In den Fig. 2a bis 2c ist ein Balkontürschnäpperkörper 2 gezeigt. In ihn sind zwei Befestigungsausnehmungen 21, 22 als Langlochausnehmungen eingebracht. Die beiden langlochförmigen Befestigungsausnehmungen 21, 22 weisen einen Befestigungsausnehmungsmittelpunkt M1 auf. In der Mitte des Balkontürschnäpperkörpers 2 ist eine Schnäpperausnehmung 27.5 eingebracht, die zu beiden Seiten von Schnäpperriegeln 27.3 begrenzt wird. In die Schnäpperausnehmung ist ein Schnäpperbolzen 27.1 einführbar. Zu beiden Seiten der Schnäpperriegel 27.3 ist eine Befestigungsausnehmung 23 und eine weitere Befestigungsausnehmung 24 eingebracht. Wie Fig. 2b zeigt, ist zwischen der Befestigungsausnehmung 24 und der Befestigungsausnehmung 26 eine Schnäpperfeder 27.2 angeordnet.

An den sich gegenüberliegenden Außenseiten des Balkontürschnäpperkörpers 2 ist jeweils eine Greiferausnehmung 28, 29 eingebracht, die jeweils einen Greiferausnehmungsmittelpunkt M2 aufweisen.

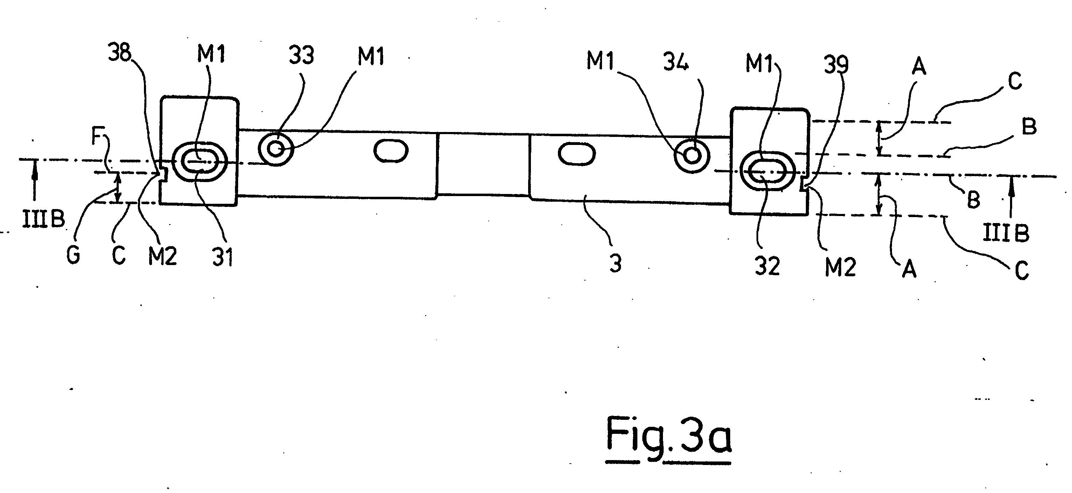

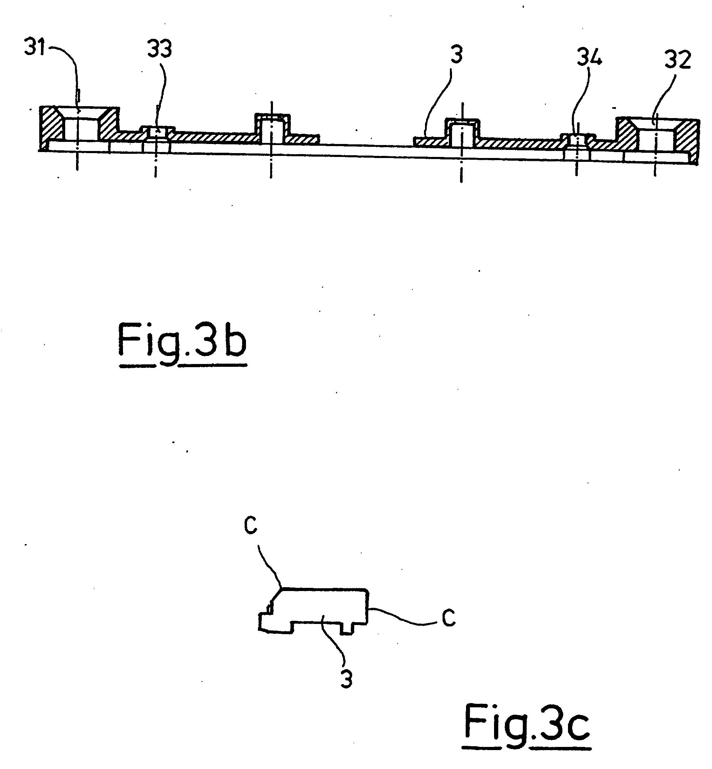

In den Fig. 3a bis 3c ist ein Unterteilkörper 3 dargestellt. Der Unterteilkörper 3 besteht aus einem Mittelteil, an dem zu beiden Seiten zwei Außenteile angeordnet sind. Wie insbesondere die Fig. 3a und 3b zeigen, ist in jeweils ein Außenteil des Unterteilkörpers 3 eine Befestigungsausnehmung 33 bzw. 34 eingebracht. Die Befestigungsausnehmungen 33, 34 weisen einen Befestigungsausnehmungsmittelpunkt M1 auf und sind als Langlochausnehmung ausgebildet.

In den Mittelteil sind in der Nachbarschaft der Befestigungsausnehmungen 31, 32 zwei zweite Befestigungsausnehmungen 33, 34 eingebracht. Auch diese weisen einen Befestigungsausnehmungsmittelpunkt M1 auf. Die Befestigungsausnehmungen 33, 34 sind als Grundausnehmungen ausgebildet. Neben den beiden Befestigungsausnehmungen 33, 34 sind zwei weitere, nicht bezeichnete Langloch-Arretierungsausnehmungen vorgesehen.

An den sich gegenüberliegenden Außenseiten des Unterteilkörpers 3 ist jeweils eine Greiferausnehmung 38, 39 eingebracht, die jeweils einen Greiferausnehmungsmittelpunkt M2 aufweisen.

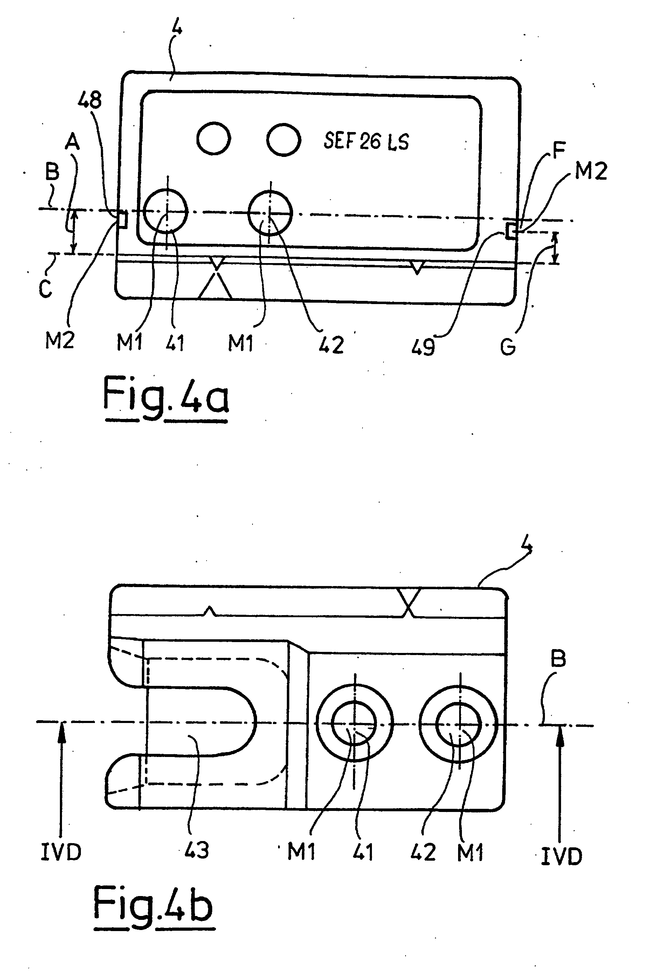

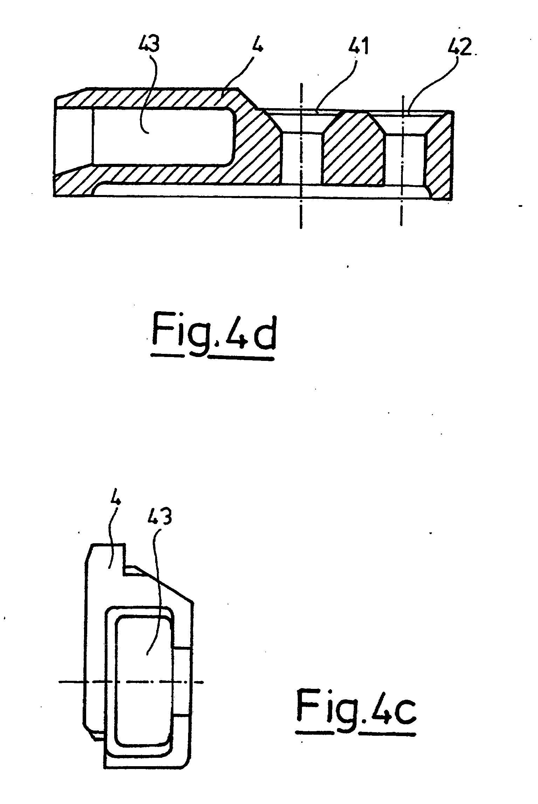

In den Fig. 4a bis 4d ist ein Sicherheitsschließblechkörper 4 dargestellt. In ihm sind die mit 41 und 42 bezeichneten Befestigungsausnehmungen eingebracht, die jeweils einen Befestigungsausnehmungsmittelpunkt M1 aufweisen. Wie die Fig. 4d zeigt, sind beide Befestigungsausnehmungen 41, 42 ebenso wie die Befestigungsausnehmungen 11, 12 für Senkschrauben ausgebildet. Mit 43 ist eine Schließausnehmung bezeichnet, die für die speziellen Funktionen des Sicherheitsschließblechkörpers 4 vorgesehen ist.

Fig. 4a zeigt die Rückseite des Sicherheitsschließblechkörpers 4. Auf der Rückseite sind die Kurzbezeichnung SEF 26 LS sowie daneben zwei kreisförmige Konfigurationen angeordnet.

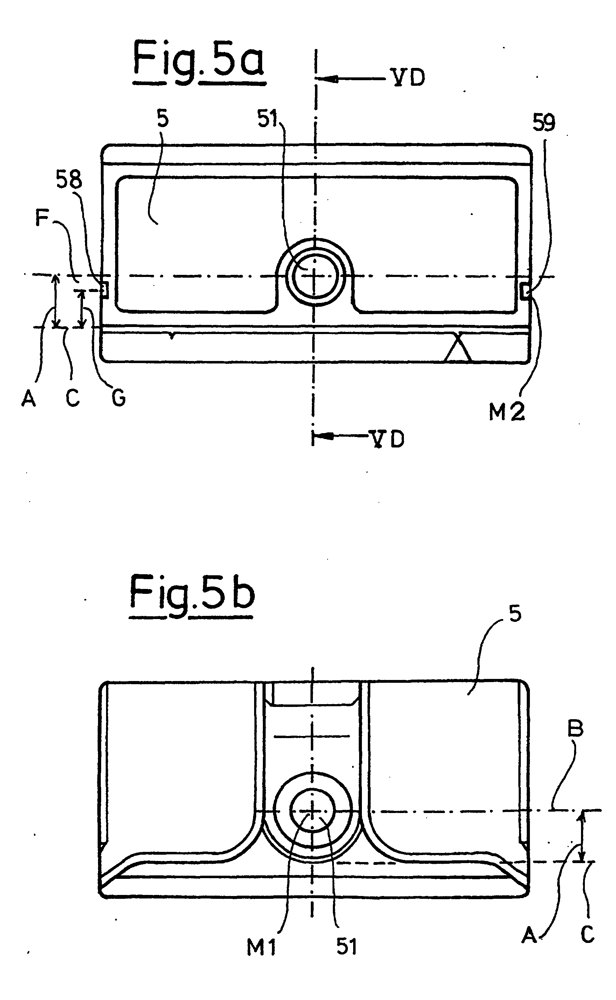

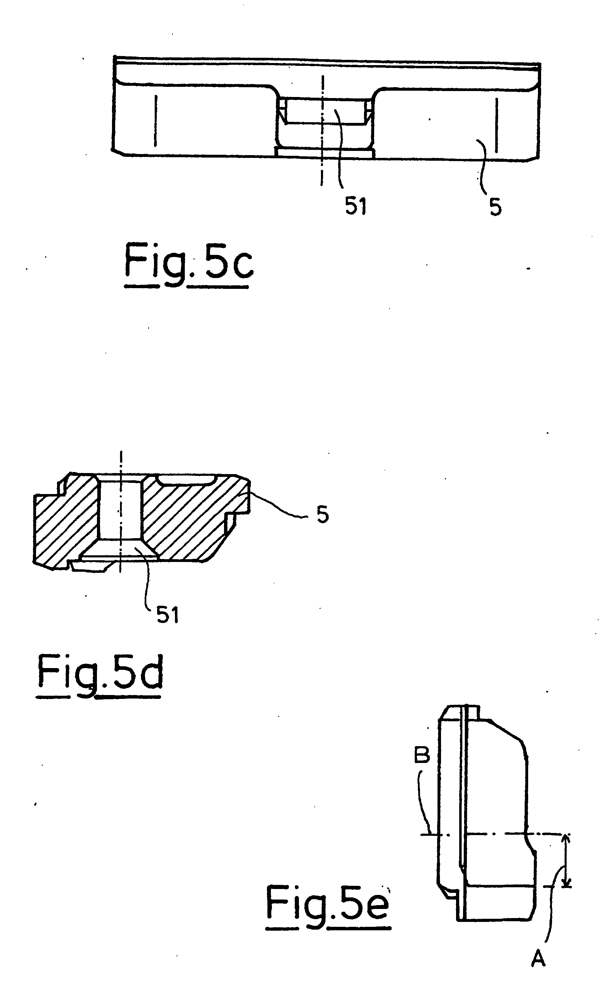

In den Fig. 5a bis 5i ist ein Schließkörper 5 gezeigt. Der Schließkörper 5 weist eine einzige Befestigungsausnehmung 51 mit einem Befestigungsausnehmungsmittelpunkt M1 auf. Die Befestigungsausnehmung 51 ist ebenso wie die Befestigungsausnehmung 11 für Senkschrauben ausgebildet.

An den sich gegenüberliegenden Außenseiten des Schließkörpers 5 ist jeweils eine Greiferausnehmung 58, 59 mit einem Greiferausnehmungsmittelpunkt M2 eingebracht. Die übrige Gestaltung des Schließkörpers 5 ist so vorgenommen, daß hiermit die speziellen Aufgaben beim Schließen des Flügels wahrgenommen werden können.

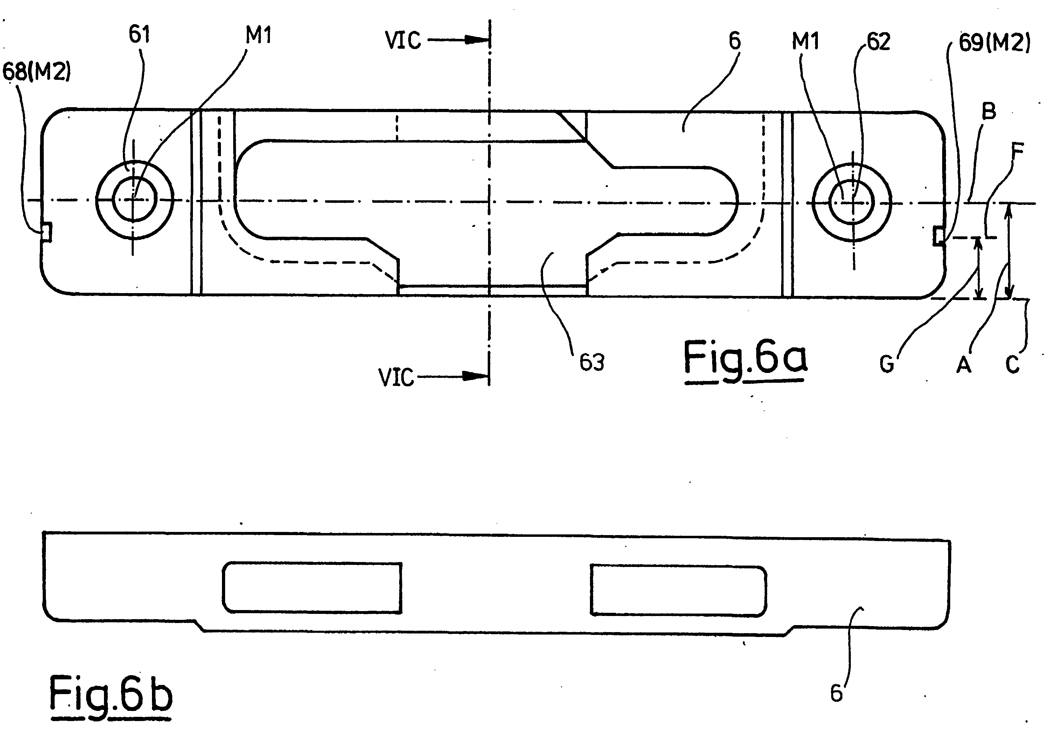

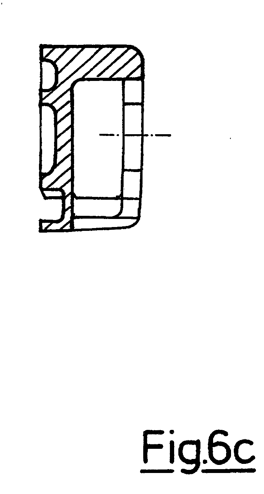

In Fig. 6a bis 6c ist ein Kipp-Schließblechkörper 6 dargestellt. Er weist die mit 61 und 62 bezeichnete Befestigungsausnehmungen mit jeweils einem Befestigungsausnehmungsmittelpunkt M1 auf. In der Mitte des Kippschließblechkörpers 6 ist eine Kippschließausnehmung 63 derart eingebracht, daß mit ihr die speziellen Aufgaben des Kippschließblechkörpers 6 wahrgenommen werden können.

An den gegenüberliegenden Außenseiten ist jeweils eine Greiferausnehmung 68, 69 mit einem Greiferausnehmungsmittelpunkt M3 eingebracht.

Um die Beschlagteilkörper 1, ... 6, die die unterschiedlichsten Aufgaben haben und deshalb auch unterschiedlichste Reliefkonfigurationen aufweisen, zu einer Schließblechfamilie zusammenzufassen, sind sie mit wenigstens einem Einheitlichkeitselement versehen. Als erstes Einheitlichkeitselement sind die Befestigungsausnehmungsmittelpunkte M1 sämtlicher Befestigungsausnehmungen 11, 12, 21, 22, 31, 32, 41, 42, 51, 61, 62 und 68, 69 in einer Befestigungsausnehmungsmittelpunktlinie B liegend angeordnet. Die Befestigungsmittelpunktlinie B ist, wie die Fig. 1a, 2a, 3a, 4a, 5a und 5b sowie 6a zeigen, in einem Befestigungsbezugsabstand A gegenüber einer Körperbezugslinie C beabstandet.

Fig. 2a weist hier eine Besonderheit auf, und zwar sind hier die beiden Befestigungsausnehmungen 23, 24 ebenfalls in der Befestigungsmittelpunktlinie B aufgereiht und ebenfalls im gleichen Befestigungsbezugsabstand A gegenüber einer weiteren Körperbezugslinie C beabstandet. Eine weitere Besonderheit zeigt die Fig. 3a. Hier sind die beiden Befestigungsausnehmungen 33, 34, die als Klippausnehmungen dienen können, ebenfalls in einer weiteren Befestigungsausnehmungsmittelpunktlinie B aufgereiht, die im gleichen Befestigungsbezugsabstand A gegenüber einer weiteren ebenfalls mit C bezeichneten Körperbezugslinie beabstandet ist. Hier wird das erste Einheitlichkeitselement durch weitere ergänzt, die dem Montageautomaten eine Gruppenunterteilung ermöglichen.

Desweiteren sind sämtliche Greiferausnehmungen 18, 19, 28, 29, 38, 39, 48, 49 und 68, 69 mit ihren Greiferausnehmungsmittelpunkten M2 entlang einer Greiferausnehmungsmittelpunktlinie E als zweites Einheitlichkeitselement aufgereiht. Der Abstand der Greiferausnehmungsmittelpunktlinie F zur Körperbezugslinie C weist einen einheitlichen Greiferbezugsabstand G auf.

Die Montage des Schließauflaufkörpers 1 bis hin zum Kippschließkörper 6 wird wie folgt vorgenommen und im folgenden speziell am Schließauflaufkörper 1 näher beschrieben.

Der Schließauflaufkörper 1 wird einem Magazin (nicht dargestellt) durch den Montageautomaten (nicht dargestellt) entnommen. Hierbei greift der Montageautomat mit seinem Greifer den Schließauflaufkörper 1 an den beiden sich gegenüberliegenden Greiferausnehmungen 18 und 16 und führt ihn zu einem Tür- oder Fensterrahmen.

Aufgrund des Abstandes zwischen den beiden Greiferausnehmungen 18, 19 ermittelt der Montageautomat, daß es sich um die Schließauflaufkörper 1 handelt und setzt ihn an die Stelle des Tür- oder Fensterrahmens, an den er für ein Zusammenwirken mit Beschlagteilen am Flügelrahmen, der die Glasscheibe trägt, zu befestigen ist.

Ist der Schließauflaufkörper 1 an der entsprechenden Stelle positioniert, entnimmt der Montageautomat für die Befestigungsausnehmung 11 und danach für die Befestigungsausnehmung 12 eine Befestigungsschraube aus seinem Schraubenmagazin. Da beide Schrauben gleich ausgebildet sind, kann die zu vorderst liegende Schraube des Schraubenmagazins verwendet werden. Anschließend werden beide Schrauben eingedreht und so der Schließauflaufkörper 1 mit dem Tür- oder Fensterrahmen befestigt.

Als nächstes ergreift der Montageautomat mit seinem Greifer den Balkontürschnäpperkörper 2. Durch den Abstand der beiden Greiferausnehmungen 28, 29 stellt er fest, daß es sich um den Balkontürschnäpperkörper 2 handelt und setzt ihn an die Stelle des Tür- oder Fensterrahmens, an der er angeschraubt werden soll.

Während als Körperbezugslinie C beim Schließauflaufkörper 1 die Körperseitenkante 15 diente, findet hier für das Bedienen der beiden Befestigungsausnehmungen 21, 22 die Körperseitenkante 25 als Körperbezugslinie C Verwendung. Im nächsten Schritt tastet der Montageautomat die der Körperseitenkante 25 gegenüberliegende Körperseitenkante 26 ab, die als zweite Körperbezugslinie C Einsatz findet. Da beide im gleichen Befestigungsbezugsabstand A hinsichtlich zu ihren Befestigungsausnehmungen liegen, ist der Montageautomat in der Lage, mit Hilfe der Körperseitenkante 26 die beiden Befestigungsausnehmunge 23, 24 zu bedienen. Welche Befestigungsausnehmungen zu erst bedient werden, hängt vom Softwareprogramm des Montageautomaten ab.

Die Befestigungsausnehmung 21, 22 bzw. 23, 24 sind als Langlöcher ausgebildet. Deshalb wird der Montageautomat zuerst die Schrauben so weit anziehen, daß ein Einjustieren des Balkontürschnäpperkörpers 2 gegenüber dem Schnäpperbolzen 27.1 gegeben ist. Ist die Justagestellung gefunden, schraubt der Montageautomat alle vier Befestigungsschrauben in den Befestigungsausnehmung 21, 22 bzw. 23, 24 fest.

In gleicher Art und Weise werden die übrigen Beschlagteilkörper, d. h. der Unterteilkörper 3 bis hin zum Kipp-Schließblechkörper 6 in entsprechender Anzahl und an die entsprechenden Stellen aufgrund der Abstände ihrer Greiferausnehmungen gesetzt und mit Hilfe des Montageautomaten durch ein Einschrauben der Befestigungsschrauben in die Befestigungsausnehmungen befestigt.

Von besonderem Vorteil ist es, daß für den Montageautomaten Schließauflaufkörper 1 bis hin zum Kippschließblechkörper 6 gleich zu behandeln sind, da sämtliche Befestigungsausnehmungen 11, 12, ... 61, 62 in einer Reihe liegen und nur nacheinander bedient werden brauchen. Das Abtasten weiterer Befestigungsausnehmungen, die in einer weiteren Befestigungsausnehmungsmittelpunktlinie B gegenüber einer weiteren Körperbezugslinie C aufgereiht sind, läßt auch spezielle Schraubverbindungen, die aufgrund bestimmter Einsatzfälle notwendig sind, zu. Das Programm des Montageautomaten ist so ausgelegt, daß eine derartige Abtastung unkompliziert und schnell vorgenommen werden kann.

### Bezugszeichenliste

- 1: Schließauflaufkörper
- 2: Balkontürschnapperkörper
- 3: Unterteilkörper
- 4: Sicherheitsschließblechkörper
- 5: Schließkörper
- 6: Kippschließblechkörper

- A: Betätigungsbezugsabstand
- B: Befestigungsausnehmungsmittelpunktlinie
- C: Körperbezugslinie
- F: Greiferausnehmungsmittelpunktlinie
- G: Greiferbezugsabstand
- M1: Befestigungsausnehmungsmittelpunkt
- M2: Greiferausnehmungsmittelpunkt
- 11, 12: Befestigungsausnehmung
- 13, 14: Vierkantausnehmung
- 15: Körperseitenkante
- 18, 19: Greiferausnehmung
- 21, 22 23, 24: Befestigungsausnehmung
- 25, 26: Körperseitenkante
- 27.1: Schnäpperbolzen
- 27.2: Schnäpperfeder
- 27.3: Schnäpperriegel
- 27.4: Unterteil
- 27.5: Schnäpperausnehmung
- 28, 29: Greiferausnehmung
- 31, 32 33, 34: Befestigungsausnehmung
- 38, 39: Greiferausnehmung
- 41, 42: Befestigungsausnehmung
- 43: Schließausnehmung
- 48, 49: Greiferausnehmung
- 51: Befestigungsausnehmung
- 58, 59: Greiferausnehmung
- 61, 62: Befestigungsausnehmung
- 63: Kipp-Schließausnehmung
- 68, 69: Greiferausnehmung

## Patentansprüche

1. Für eine Montage von Schließblechsystemen an Rahmen, insbesondere Tür- oder Fensterrahmen, bestimmte Vielzahl unterschiedlich ausgebildeter Beschlagteilkörper (1, 2, 3, 4, 5, 6), die mit wenigstens einer für alle Beschlagteilkörper (1, 2, 3, 4, 5, 6) auf derselben Mittellinie (B) angeordneten Ausnehmung oder Ausnehmungen (11, 12, 21, 22, 31, 32, 41, 42,, 51, 61, 62) für Befestigungsteile versehen ist, **dadurch gekennzeichnet, dass** zur automatengestützten Montage der Beschlagteilkörper (1, 2, 3, 4, 5, 6) zusätzlich zu der ersten Mittellinie (B) eine weitere Mittellinie (F) allen Beschlagteilkörpern gemeinsam ist, auf der wenigstens eine Montagehilfsausnehmung (18, 19, 28, 29, 38, 39, 48, 49, 58, 59, 68, 69) angeordnet bzw. mehrere Montagehilfsausnehmungen aufgereiht sind, und dass die genannten Mittellinien (B;F) bei sämtlichen Beschlagteilkörpern (1, ... 6) in Abständen (A bzw. G) parallel zu einer Körperbezugslinie (C) verlaufen, so daß für den Montageautomaten sämtliche Ausnehmungen auf maximal zwei Mittellinien (B;F) liegen.

2. Vielzahl unterschiedlich ausgebildeter Beschlagteilkörper nach Anspruch 1, **dadurch gekennzeichnet, daß** die Körperbezugslinie (C) eine Körperseitenkante (15) ist.

3. Vielzahl unterschiedlich ausgebildeter Beschlagteilkörper nach Anspruch 1 oder 2, **dadurch gekennzeichnet, daß** die Beschlagteilkörper (1, ..., 6).als Montagehilfsausnehmungen zwei sich gegenüberliegende Greiferausnehmungen (18, 19, ..., 68, 69) mit einem runden und/oder mehreckigen Querschnitt eingebracht sind.

4. Vielzahl unterschiedlich ausgebildeter Beschlagteilkörper nach einem der Ansprüche 1 bis 3, **dadurch gekennzeichnet, daß** die Beschlagteilkörper ausgebildet sind als
- ein Schließauflaufkörper (1),
- ein Balkontürschnäpperkörper (2),
- ein Unterteilkörper (3),
- ein Sicherheitsschließblechkörper (4),
- ein Schließkörper (5) und
- ein Kippschließblechkörper (6).

5. Vielznhl unterschiedlich ausgebildeter Beschlagteilkörper (1, 2, 3, 4, 5, 6) nach Anspruch 1, **dadurch gekennzeichnet,**
- **dass** der Beschlagteilkörper (1, 2, 3, 4, 5, 6) einen erste Mittellinie (B) besitzt, auf der wenigstens eine Ausnehmung (11, 12, 21, 22, 31, 32, 41, 42,, 51, 61, 62) für Befestigungsteile angeordnet ist bzw. mehrere Ausnehmungen für Befestigungsteile aufgereiht sind,
- **dass** er zusätzlich zur ersten Mittellinie (B) eine weitere Mittellinie (F) besitzt, auf der wenigstens eine Montagehilfsausnehmung (18, 19, 28, 29, 38, 39, 48, 49, 58, 59, 68, 69) angeordnet ist bzw. mehrere Montagehilfsausnehmungen aufgereiht sind,
- und **dass** die genannten Mittellinien (B;F) bei sämtlichen Beschlagteilkörpern (1, ... 6) in Abständen (A bzw. G) parallel zu einer Körperbezugslinie (C) verlaufen.

6. Beschlagteilkörper nach Anspruch 5, **dadurch gekennzeichnet, daß** als Montagehilfsausnehmungen zwei sich gegenüberliegende Greiferausnehmungen (18, 19, ..., 68, 69) mit einem runden und/oder mehreckigen Querschnitt eingebracht sind.

7. Beschlagteilkörper nach Anspruch 6, **dadurch gekennzeichnet, dass** der Beschlagteilkörper ausgebildet ist als
- ein Schließauflaufkörper (1) oder
- ein Balkontürschnäpperkörper (2) oder
- ein Unterteilkörper (3) oder
- ein Sicherheitsschließblechkörper (4) oder
- ein Schließkörper (5) oder
- ein Kippschließblechkörper (6).

## Claims

1. A plurality of differently formed fitting component bodies (1, 2, 3, 4, 5, 6) which are intended for the assembly of striking plate systems on frames, in particular door or window frames, and which are provided with at least one opening or openings (11, 12, 21, 22, 31, 32, 41, 42, 51, 61, 62) for fastening parts, which opening(s) for all fitting component bodies (1, 2, 3, 4, 5, 6) is/are disposed on the same centre line (B), **characterised in that** for machine-assisted assembly of the fitting component bodies (1, 2, 3, 4, 5, 6) a further centre line (F), in addition to the first centre line (B), is common to all fitting component bodies, and on said further centre line at least one auxiliary assembly opening (18, 19, 28, 29, 38, 39, 48, 49, 58, 59, 68, 69) is disposed or several auxiliary assembly openings are lined up, and that the said centre lines (B; F) in the case of all of the fitting component bodies (1, ...6) extend at spaced intervals (A, G) in parallel with a body reference line (C), so that for the assembly machine all of the openings lie on a maximum of two centre lines (B; F).

2. A plurality of differently formed fitting component bodies as claimed in claim 1, **characterised in that** the body reference line (C) is a body side edge (15).

3. A plurality of differently formed fitting component bodies as claimed in claim 1 or 2,
**characterised in that** the fitting component bodies (1, ..., 6) [lacuna] two mutually opposite grip openings (18, 19, ..., 68, 69) having a round and/or polygonal cross-section are provided as auxiliary assembly openings.

4. A plurality of differently formed fitting component bodies as claimed in any one of claims 1 to 3, **characterised in that** the fitting component bodies are formed as
- a lock abutment body (1),
- a French window spring bolt body (2),
- a base part body (3),
- a security striking plate body (4),
- a locking body (5) and
- a tilt striking plate body (6).

5. A plurality of differently formed fitting component bodies (1, 2, 3, 4, 5, 6) as claimed in claim 1, **characterised in that**
- the fitting component body (1, 2, 3, 4, 5, 6) comprises a first centre line (B), on which at least one opening (11, 12, 21, 22, 31, 32, 41, 42, 51, 61, 62) for attachment parts is disposed or several openings for attachment parts are lined up,
- in addition to the first centre line (B), the said fitting component body comprises a further centre line (F), on which at least one auxiliary assembly opening (18, 19, 28, 29, 38, 39, 48, 49, 58, 59, 68, 69) is disposed or several auxiliary assembly openings are lined up,
- and the said centre lines (B; F) in the case of the all of the fitting component bodies (1, ... 6) extend at spaced intervals (A, G) in parallel with a body reference line (C).

6. Fitting component body as claimed in claim 5, **characterised in that** two mutually opposite grip openings (18, 19, ..., 68, 69) having a round and/or polygonal cross-section are provided as auxiliary assembly openings.

7. Fitting component body as claimed in claim 6, **characterised in that** the fitting component body is formed as
- a lock abutment body (1) or
- a French window spring bolt body (2) or
- a base part body (3) or
- a security striking plate body (4) or
- a locking body (5) or
- a tilt striking plate body (6).

## Revendications

1. Quantité déterminée de corps (1, 2, 3, 4, 5, 6) de ferrures de configurations différentes, qui sont destinés au montage de systèmes de gâches sur des châssis, en particulier des châssis de portes ou de fenêtres, et comportent au moins un évidement ou des évidements (11, 12, 21 , 22, 31, 32, 41, 42, 51, 61, 62) prévus pour des éléments de fixation et agencés sur le même axe (B) pour tous les corps (1, 2, 3, 4, 5, 6) de ferrures, **caractérisée en ce que** tous les corps de ferrures comportent, en plus du premier axe (B) un autre axe (F) sur lequel au moins un évidement (18, 19, 28, 29, 38, 39, 48, 49, 58, 59, 68, 69) d'assistance au montage est agencé ou plusieurs évidements d'assistance au montage sont alignés, en vue du montage assisté par automates des corps (1, 2, 3, 4, 5, 6) de ferrures, et **en ce que** les tracés des axes mentionnés (B; F) ci-dessus sont parallèles à un axe de référence (C) des corps et situés aux mêmes distances (A ou G) de celui-ci pour tous les corps (1, ... 6) de ferrures, de sorte que tous les évidements ménagés pour les automates de montage sont situés sur deux axes (B; F) au maximum.

2. Quantité de corps de ferrures de configurations différentes selon la revendication 1, **caractérisée en ce que** la ligne de référence (C) des corps est une arête latérale (15) des corps.

3. Quantité de corps de ferrures de configurations différentes selon la revendication 1 ou 2, **caractérisée en ce que** deux évidements opposés (18, 19, ... 68, 69) de griffes, à section transversale ronde et/ou polygonale, sont ménagés comme évidements d'assistance au montage dans les corps de ferrures (1, ..., 6).

4. Quantité de corps de ferrures de configurations différentes selon l'une quelconque des revendications précédentes, **caractérisée en ce que** les corps de ferrures consistent en:
- un corps d'entrée (1 ) de fermeture,
- un corps (2) de pêne demi-tour pour porte de balcon,
- un corps (3) d'élément inférieur,
- un corps (4) de gâche de sécurité,
- un corps (5) de fermeture et
- un corps (6) de gâche basculante.

5. Quantité de corps de ferrures de configurations différentes selon la revendication 1, **caractérisée en ce que**
- chaque corps (1, 2, 3, 4, 5, 6) de ferrure possède un premier axe (B) sur laquelle au moins un évidement (11, 12, 21, 22, 31, 32, 41, 42, 51, 61, 62) pour élément de fixation est agencé ou plusieurs évidements pour éléments de fixation sont alignés,
- **en ce que** le corps comporte en plus du premier axe (B) un autre axe (F) sur lequel au moins un évidement (18, 19, 28, 29, 38, 39, 48, 49, 58, 59, 68, 69) d'assistance au montage est agencé, ou plusieurs évidements d'assistance au montage sont alignés, et **en ce que**
- les tracés des axes (B; F) mentionnés ci-dessus sont parallèles à un axe de référence (C) des corps et situés aux mêmes distances (A ou G) de celui-ci pour tous les corps (1, ... 6) de ferrures.

6. Corps de ferrure selon la revendication 5, **caractérisés en ce que** deux évidements opposés (18, 19, ... 68, 69) de griffes, à section transversale ronde et/ou polygonale, sont ménagés comme évidements d'assistance au montage.

7. Corps de ferrure selon la revendication 6, **caractérisé en ce que** le corps de ferrure consiste en :
- un corps d'entrée (1) de fermeture,
- un corps (2) de pêne demi-tour pour porte de balcon,
- un corps (3) d'élément inférieur,
- un corps (4) de gâche de sécurité,
- un corps (5) de fermeture et
- un corps (6) de gâche basculante.
